# EUROPEAN PATENT APPLICATION

(11) **EP 4 806 872 A1**
(43) Date of publication of application: **16.09.2026**
(21) Application number: 26163853.0
(22) Date of filing: 11.03.2026
(51) Int. Cl.: C04B 41/00, B32B 18/00, C04B 41/50, C04B 41/87, F01D 5/18, F01D 5/28

(54) **METHOD FOR FORMING A CERAMIC MATRIX COMPOSITE COMPONENT**

(30) Priority: 12.03.2025 US 202519077156
(71) Applicant: General Electric Company, Cincinnati, Ohio 45215 (US)
(72) Inventor: STAPLETON, David Scott, Lynn, 01910 (US)
(74) Representative: Openshaw & Co.

(57) **Abstract**

A method of forming a ceramic matrix composite (CMC) component (230) includes providing a ceramic structure (242) defining at least one wall (246) where the at least one wall (246) includes one or more bores (262) extending through the wall (246). At least one bore (262) of the one or more bores (262) has an inlet end (264) proximate a first side (248) of the wall (246) and an outlet end (266) proximate a second side (250) of the wall (246). One or more CMC plies (272) are disposed on at least a portion of the second side (250) to cover the outlet end (266). The one or more CMC plies (272) are densified and bonded to the ceramic structure (242). An environmental barrier coating (282) is applied on least a portion of the one or more CMC plies (272) covering the outlet end (266) of the at least one bore (262).

## Description

### TECHNICAL FIELD

The present subject matter relates generally to components and processes of fabricating components, or more particularly to ceramic matrix composite components.

### BACKGROUND

Silicon carbide (SiC)-based ceramic matrix composite (CMC) materials have been proposed as materials for certain components of various types of propulsion devices. CMCs are a class of materials that offer a good alternative for higher temperature sections of the propulsion device. CMCs comprise fiber reinforcement made of refractory fibers, densified with a ceramic matrix.

Within a propulsion device, such as, by way of non-limiting example, a turbine engine, hot compressed gas produced by combustion of a fuel follows a flow path flows alongside or through certain CMC components. CMC components can be coated with environmental barrier coatings (EBCs) to protect them from the harsh environment of high temperature engine sections. EBCs are applied to silicon-bearing materials and other materials susceptible to attack by reactive species, such as high temperature water vapor. EBCs provide protection by prohibiting contact between the environment and the surface of the material. EBCs applied to silicon-bearing materials, for example, are designed to be relatively stable chemically in high-temperature, water vapor-containing environments.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of a gas turbine engine according to the present disclosure.
FIG. 2 is a schematic view of an exemplary shroud assembly according to the present disclosure.
FIG. 3 is a schematic cross-section view of a portion of a turbine section of a gas turbine engine having an exemplary shroud assembly according to the present disclosure.
FIGS. 4A-4D are schematic, side views of various stages of forming an exemplary ceramic matrix composite component in accordance with an embodiment of the present disclosure.
FIG. 4E is a schematic, side view of an exemplary ceramic matrix composite component in accordance with an embodiment of the present disclosure with an opened cooling flowpath.
FIG. 5 is a schematic, side view of an exemplary ceramic matrix composite component in accordance with an embodiment of the present disclosure.
FIG. 6 is a schematic, side view of an exemplary ceramic matrix composite component in accordance with an embodiment of the present disclosure.
FIG. 7 is a schematic, side view of an exemplary ceramic matrix composite component in accordance with an embodiment of the present disclosure.
FIG. 8 is a schematic, side view of an exemplary ceramic matrix composite component in accordance with an embodiment of the present disclosure.
FIG. 9A is a schematic, plan view of an exemplary ceramic matrix composite component in accordance with an embodiment of the present disclosure.
FIG. 9B is a schematic, plan view of an exemplary ceramic matrix composite component in accordance with an embodiment of the present disclosure.
FIG. 10 is a flow diagram of an exemplary method of forming an exemplary ceramic matrix composite component in accordance with an embodiment of the present disclosure.

Corresponding reference characters indicate corresponding parts throughout the several views. The exemplifications set out herein illustrate exemplary embodiments of the disclosure, and such exemplifications are not to be construed as limiting the scope of the disclosure in any manner.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The following description is provided to enable those skilled in the art to make and use the described embodiments contemplated for carrying out the disclosure. Various modifications, equivalents, variations, and alternatives, however, will remain readily apparent to those skilled in the art. Any and all such modifications, variations, equivalents, and alternatives are intended to fall within the scope of the present disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

For purposes of the description hereinafter, the terms "upper", "lower", "right", "left", "vertical", "horizontal", "top", "bottom", "lateral", "longitudinal", and derivatives thereof shall relate to the disclosure as it is oriented in the drawing figures. However, it is to be understood that the disclosure may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

As used herein, the terms "first" and "second" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The singular forms "a", "an", and "the" include plural references unless the context clearly dictates otherwise.

The terms "coupled," "fixed," "attached to," and the like refer to both direct coupling, fixing, or attaching, as well as indirect coupling, fixing, or attaching through one or more intermediate components or features, unless otherwise specified herein.

The term "proximate" refers to being closer to one end than an opposite end. For example, when used in conjunction with first and second ends; high pressure and low pressure sides; or the like, the phrase "proximate the first end," or "proximate the high pressure side," refers to a location closer to the first end than the second end, or closer to the high pressure side than the low pressure side, respectively.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

The terms "low" and "high", or their respective comparative degrees (e.g., -er, where applicable), when used with a compressor, a turbine, a shaft, or spool components, etc. each refer to relative speeds within an engine unless otherwise specified. For example, a "low turbine" or "low speed turbine" defines a component configured to operate at a rotational speed, such as a maximum allowable rotational speed, lower than a "high turbine" or "high speed turbine" of the engine.

The terms "forward" and "aft" refer to relative positions within a gas turbine engine or vehicle, and are based on a normal operational attitude of the gas turbine engine or vehicle. More particularly, forward and aft are used herein with reference to a direction of travel of the vehicle and a direction of propulsive thrust of the gas turbine engine.

As used herein, the terms "axial" and "axially" refer to directions and orientations that extend substantially parallel to a centerline of the gas turbine engine. Moreover, the terms "radial" and "radially" refer to directions and orientations that extend substantially perpendicular to the centerline of the gas turbine engine. In addition, as used herein, the terms "circumferential" and "circumferentially" refer to directions and orientations that extend arcuately about the centerline of the gas turbine engine.

A "third stream" as used herein means a non-primary air stream capable of increasing fluid energy to produce a minority of total propulsion system thrust. The third stream may generally receive inlet air (air from a ducted passage downstream of a primary fan) instead of freestream air (as the primary fan would). A pressure ratio of the third stream may be higher than that of the primary propulsion stream (e.g., a bypass or propeller driven propulsion stream). The thrust may be produced through a dedicated nozzle or through mixing of an airflow through the third stream with a primary propulsion stream or a core air stream, e.g., into a common nozzle.

In certain exemplary embodiments an operating temperature of the airflow through the third stream may be less than a maximum compressor discharge temperature for the engine, and more specifically may be less than 350 degrees Fahrenheit (such as less than 300 degrees Fahrenheit, such as less than 250 degrees Fahrenheit, such as less than 200 degrees Fahrenheit, and at least as great as an ambient temperature). In certain exemplary embodiments these operating temperatures may facilitate heat transfer to or from the airflow through the third stream and a separate fluid stream. Further, in certain exemplary embodiments, the airflow through the third stream may contribute less than 50% of the total engine thrust (and at least, e.g., 2% of the total engine thrust) at a takeoff condition, or more particularly while operating at a rated takeoff power at sea level, static flight speed, 86 degree Fahrenheit ambient temperature operating conditions.

Furthermore in certain exemplary embodiments, aspects of the airflow through the third stream (e.g., airstream, mixing, or exhaust properties), and thereby the aforementioned exemplary percent contribution to total thrust, may passively adjust during engine operation or be modified purposefully through use of engine control features (such as fuel flow, electric machine power, variable stators, variable inlet guide vanes, valves, variable exhaust geometry, or fluidic features) to adjust or optimize overall system performance across a broad range of potential operating conditions.

As used herein, the term "composite material" refers to a material produced from two or more constituent materials, wherein at least one of the constituent materials is a non-metallic material. Example composite materials include polymer matrix composites (PMC), ceramic matrix composites (CMC), chopped fiber composite materials, etc.

As used herein, polymer matrix composites or "PMC" refers to a class of materials that include a polymer resin matrix and fibers that are stronger than the matrix, stiffer than the matrix, or both. The fibers may be a variety of materials, nonlimiting examples of which include carbon (e.g., graphite) fibers, glass (e.g., fiberglass) fibers, polymer (e.g., Kevlar^{®}) fibers, basalt fibers, ceramic fibers (e.g. silicon carbide or alumina) and metal fibers. Resins for PMC matrix materials can be generally classified as thermosets or thermoplastics. Thermoplastic resins are generally categorized as polymers that can be repeatedly softened and flowed when heated and hardened when sufficiently cooled due to physical rather than chemical changes. Notable example classes of thermoplastic resins include nylons, thermoplastic polyesters, polyaryletherketones, and polycarbonate resins. Specific examples of high performance thermoplastic resins that have been contemplated for use in aerospace applications include polyetheretherketone (PEEK), polyetherketoneketone (PEKK), polyetherimide (PEI), and polyphenylene sulfide (PPS). In contrast, once fully cured into a hard rigid solid, thermoset resins do not undergo significant softening when heated but, instead, thermally decompose when sufficiently heated. Notable examples of thermoset resins include epoxy, bismaleimide (BMI), polyesters, vinylesters, phenolics, and polyimide resins.

PMC materials are produced in various forms for different types for manufacturing. PMC manufacturing may be generally classified into two types: (1) prepreg layup where the operators start with materials where the fibers are preimpregnated with resin usually in thin layers which may be placed in a mold and cured to form the part; and (2) infusion where dry fibers are assembled into a preform shape and resin is infused or injected into the dry preform. There are also many subvariants of these two approaches.

Prepregs may be unidirectional fibers impregnated with resin or fabrics with fibers in multiple directions (e.g., woven fabrics, braids, non-crimp fabrics, uniweave fabrics) impregnated with resin and are typically 0.002 inches (in) to 0.050 in thick. Prepregs may come in wide rolls where the manufacturer cuts ply shapes, stack the cut ply shapes into the mold and cures the cut ply shapes in the mold to make the final shape. Prepregs may be slit into narrower widths (e.g., 1/8 in to 12 in) and applied to a mold using automated fiber placement (AFP), then cured to create a final geometry. Prepregs may also be slit and chopped into small chips (e.g., 1 in x 2 in, ½ in x 1 in, 1 in x 1 in), dropped randomly into a mold and cured to make a part.

For infusion, the dry preform may be produced in various ways. Layers of dry woven fabric, braid, and/or non-crimp fabric may be stacked together into a shape. Fibers may be woven into a final shape using 3D weave to create the preform. The resin may also be introduced in various ways. The resin may be introduced via vacuum assisted transfer molding (VARTM) where the dry preform is enclosed in a vacuum bag under vacuum and the resin is introduced into the dry preform under vacuum pressure. Resin transfer molding (RTM) may be used where the preform is placed into a closed mold and the resin is injected into the preform under pressure. As will be appreciated, these are all examples and non-limiting.

As used herein, ceramic-matrix-composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may include a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃·2SiO₂), as well as glassy aluminosilicates.

In certain embodiments, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing and subsequent chemical processing to arrive at a component formed of a CMC material having a desired chemical composition. For example, the preform may undergo a cure or burn-out to yield a high char residue in the preform, and subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer.

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of" since the relative position above or below depends upon the orientation of the device to the viewer.

As used herein, environmental-barrier-coating or "EBC" refers to a coating system comprising one or more layers of ceramic materials, each of which provides specific or multi-functional protections to the underlying CMC. EBCs generally include a plurality of layers, such as rare earth silicate coatings (e.g., rare earth disilicates such as slurry or APS-deposited yttrium ytterbium disilicate (YbYDS)), alkaline earth aluminosilicates (e.g., comprising barium-strontium-aluminum silicate (BSAS), such as having a range of BaO, SrO, Al₂O₃, and/or SiO₂ compositions), hermetic layers (e.g., a rare earth disilicate), and/or outer coatings (e.g., comprising a rare earth monosilicate, such as slurry or APS-deposited yttrium monosilicate (YMS)). One or more layers may be doped as desired, and the EBC may also be coated with an abradable coating.

As used herein, the term "barrier coating(s)" can refer to environmental barrier coatings. The barrier coatings herein may be suitable for application to "components" found in high temperature environments (e.g., operating temperatures of about 2500 °Celsius), such as those present in gas turbine engines. Examples of such components can include, for example, combustor components, turbine blades, shrouds, nozzles, heat shields, and vanes.

As used herein, the term "barrier material" refers to compositions that are useful for forming a layer of a barrier coating on a component, such as a layer of an environmental barrier coating ("EBC"). Barrier materials that are particularly suitable for forming a layer of an EBC may be referred to as "EBC material."

Additionally, although the disclosure is not limited to any particular film thickness, the term "thin" describing any film layers of the photovoltaic device generally refers to the film layer having a thickness less than 10 micrometers ("µm").

As used herein, the term "bonded" generally means in contact with and adhered to. "Bonding" may be between the deposited particles and/or between the deposited particles and the substrate/base particles.

As described herein, the presently disclosed subject matter may involve the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer may be, for example, between about 10 µm and 200 µm, although the thickness may be determined based on any number of parameters and may be any suitable size.

The present disclosure is generally related to a ceramic composite component, and a method for forming a ceramic composite component, useable at least in applications where at least a portion of the ceramic composite component is exposed to a hot gas flowpath. The ceramic composite component includes one or more bores extending partially through a wall of the ceramic composite component. At least one bore includes an inlet end and an outlet end. The inlet end is positioned to be in fluid communication with a cooling fluid flowpath. However, the outlet end, positioned near the working gas flowpath side of the ceramic composite component, is covered by one or more CMC plies and an EBC coating so that the outlet end is not initially exposed to the working gas flowpath. In the event the EBC coating becomes compromised, the working gas flowpath will cause at least a portion of the CMC plies covering the outlet end to wear away, thereby exposing the outlet end to the working gas flow path and forming a cooling fluid flowpath through the wall from the cold side to the hot side of the ceramic composite component. Thus, embodiments of the present disclosure provide localized cooling of the ceramic composite component as an "on demand" and/or environmentally-activated basis in areas where the EBC coating has become compromised. Accordingly, instead of providing continuous cooling of the ceramic composite component when such cooling may not be needed, embodiments of the present disclosure minimize any potential performance penalty that may otherwise be associated with providing such unnecessary cooling. Additionally, at least because the outlet ends of the bores do not initially interface with the EBC coating, the durability of the EBC coating is enhanced.

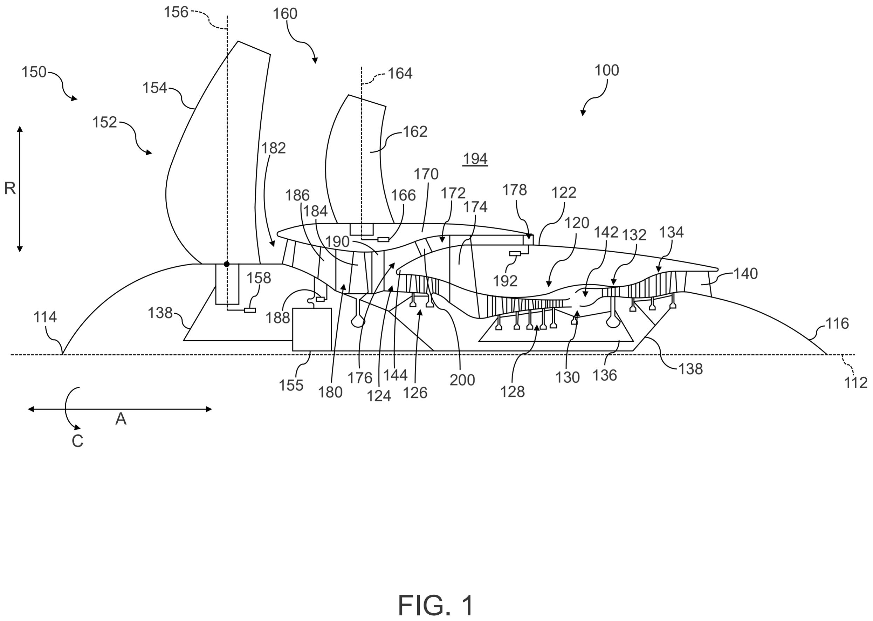

Referring now to FIG. 1, a schematic cross-sectional view of a gas turbine engine 100 is provided according to an example embodiment of the present disclosure. Particularly, FIG. 1 provides a turbofan engine having a rotor assembly with a single stage of unducted rotor blades. In such a manner, the rotor assembly may be referred to herein as an "unducted fan," or the entire engine 100 may be referred to as an "unducted turbofan engine." In addition, the engine 100 of FIG. 1 includes a third stream extending from the compressor section to a rotor assembly flowpath over the turbomachine, as will be explained in more detail below.

For reference, the engine 100 defines an axial direction A, a radial direction R, and a circumferential direction C. Moreover, the engine 100 defines an axial centerline or longitudinal axis 112 that extends along the axial direction A. In general, the axial direction A extends parallel to the longitudinal axis 112, the radial direction R extends outward from and inward to the longitudinal axis 112 in a direction orthogonal to the axial direction A, and the circumferential direction extends three hundred sixty degrees (360°) around the longitudinal axis 112. The engine 100 extends between a forward end 114 and an aft end 116, e.g., along the axial direction A.

The engine 100 includes a turbomachine 120 and a rotor assembly, also referred to a fan section 150, positioned upstream thereof. Generally, the turbomachine 120 includes, in serial flow order, a compressor section, a combustion section, a turbine section, and an exhaust section. Particularly, as shown in FIG. 1, the turbomachine 120 includes a core cowl 122 that defines an annular core inlet 124. The core cowl 122 further encloses at least in part a low pressure system and a high pressure system. For example, the core cowl 122 depicted encloses and supports at least in part a booster or low pressure ("LP") compressor 126 for pressurizing the air that enters the turbomachine 120 through core inlet 124. A high pressure ("HP"), multi-stage, axial-flow compressor 128 receives pressurized air from the LP compressor 126 and further increases the pressure of the air. The pressurized air stream flows downstream to a combustor 130 of the combustion section where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems, and are not meant to imply any absolute speed and/or pressure values.

The high energy combustion products flow from the combustor 130 downstream to a high pressure turbine 132. The high pressure turbine 132 drives the high pressure compressor 128 through a high pressure shaft 136. In this regard, the high pressure turbine 132 is drivingly coupled with the high pressure compressor 128. The high energy combustion products then flow to a low pressure turbine 134. The low pressure turbine 134 drives the low pressure compressor 126 and components of the fan section 150 through a low pressure shaft 138. In this regard, the low pressure turbine 134 is drivingly coupled with the low pressure compressor 126 and components of the fan section 150. The LP shaft 138 is coaxial with the HP shaft 136 in this example embodiment. After driving each of the turbines 132, 134, the combustion products exit the turbomachine 120 through a turbomachine exhaust nozzle 140.

Accordingly, the turbomachine 120 defines a working gas flowpath or core duct 142 that extends between the core inlet 124 and the turbomachine exhaust nozzle 140. The core duct 142 is an annular duct positioned generally inward of the core cowl 122 along the radial direction R. The core duct 142 (e.g., the working gas flowpath through the turbomachine 120) may be referred to as a second stream.

The fan section 150 includes a fan 152, which is the primary fan in this example embodiment. For the depicted embodiment of FIG. 1, the fan 152 is an open rotor or unducted fan 152. In such a manner, the engine 100 may be referred to as an open rotor engine.

As depicted, the fan 152 includes an array of fan blades 154 (only one shown in FIG. 1). The fan blades 154 are rotatable, e.g., about the longitudinal axis 112. As noted above, the fan 152 is drivingly coupled with the low pressure turbine 134 via the LP shaft 138. For the embodiments shown in FIG. 1, the fan 152 is coupled with the LP shaft 138 via a speed reduction gearbox 155, e.g., in an indirect-drive or geared-drive configuration.

Moreover, the array of fan blades 154 can be arranged in equal spacing around the longitudinal axis 112. Each fan blade 154 has a root and a tip and a span defined therebetween. Each fan blade 154 defines a central blade axis 156. For this embodiment, each fan blade 154 of the fan 152 is rotatable about its central blade axis 156, e.g., in unison with one another. One or more actuators 158 are provided to facilitate such rotation and therefore may be used to change a pitch of the fan blades 154 about their respective central blades' axes 156.

The fan section 150 further includes a fan guide vane array 160 that includes fan guide vanes 162 (only one shown in FIG. 1) disposed around the longitudinal axis 112. For this embodiment, the fan guide vanes 162 are not rotatable about the longitudinal axis 112. Each fan guide vane 162 has a root and a tip and a span defined therebetween. The fan guide vanes 162 may be unshrouded as shown in FIG. 1 or, alternatively, may be shrouded, e.g., by an annular shroud spaced outward from the tips of the fan guide vanes 162 along the radial direction R or attached to the fan guide vanes 162.

Each fan guide vane 162 defines a central blade axis 164. For this embodiment, each fan guide vane 162 of the fan guide vane array 160 is rotatable about its respective central blade axis 164, e.g., in unison with one another. One or more actuators 166 are provided to facilitate such rotation and therefore may be used to change a pitch of the fan guide vane 162 about its respective central blade axis 164. However, in other embodiments, each fan guide vane 162 may be fixed or unable to be pitched about its central blade axis 164. The fan guide vanes 162 are mounted to a fan cowl 170.

As shown in FIG. 1, in addition to the fan 152, which is unducted, a ducted fan 184 is included aft of the fan 152, such that the engine 100 includes both a ducted and an unducted fan which both serve to generate thrust through the movement of air without passage through at least a portion of the turbomachine 120 (e.g., without passage through the HP compressor 128 and combustion section for the embodiment depicted). The ducted fan 184 is rotatable about the same axis (e.g., the longitudinal axis 112) as the fan blade 154. The ducted fan 184 is, for the embodiment depicted, driven by the low pressure turbine 134 (e.g. coupled to the LP shaft 138). In the embodiment depicted, as noted above, the fan 152 may be referred to as the primary fan, and the ducted fan 184 may be referred to as a secondary fan. It will be appreciated that these terms "primary" and "secondary" are terms of convenience, and do not imply any particular importance, power, or the like.

The ducted fan 184 includes a plurality of fan blades (not separately labeled in FIG. 1) arranged in a single stage, such that the ducted fan 184 may be referred to as a single stage fan. The fan blades of the ducted fan 184 can be arranged in equal spacing around the longitudinal axis 112. Each blade of the ducted fan 184 has a root and a tip and a span defined therebetween.

The fan cowl 170 annularly encases at least a portion of the core cowl 122 and is generally positioned outward of at least a portion of the core cowl 122 along the radial direction R. Particularly, a downstream section of the fan cowl 170 extends over a forward portion of the core cowl 122 to define a fan duct flowpath, or simply a fan duct 172. According to this embodiment, the fan flowpath or fan duct 172 may be understood as forming at least a portion of the third stream of the engine 100.

Incoming air may enter through the fan duct 172 through a fan duct inlet 176 and may exit through a fan exhaust nozzle 178 to produce propulsive thrust. The fan duct 172 is an annular duct positioned generally outward of the core duct 142 along the radial direction R. The fan cowl 170 and the core cowl 122 are connected together and supported by a plurality of substantially radially-extending, circumferentially-spaced stationary struts 174 (only one shown in FIG. 1). The stationary struts 174 may each be aerodynamically contoured to direct air flowing thereby. Other struts in addition to the stationary struts 174 may be used to connect and support the fan cowl 170 and/or core cowl 122. In many embodiments, the fan duct 172 and the core duct 142 may at least partially co-extend (generally axially) on opposite sides (e.g., opposite radial sides) of the core cowl 122. For example, the fan duct 172 and the core duct 142 may each extend directly from a leading edge 144 of the core cowl 122 and may partially co-extend generally axially on opposite radial sides of the core cowl 122.

The engine 100 also defines or includes an inlet duct 180. The inlet duct 180 extends between an engine inlet 182 and the core inlet 124/fan duct inlet 176. The engine inlet 182 is defined generally at the forward end of the fan cowl 170 and is positioned between the fan 152 and the fan guide vane array 160 along the axial direction A. The inlet duct 180 is an annular duct that is positioned inward of the fan cowl 170 along the radial direction R. Air flowing downstream along the inlet duct 180 is split, not necessarily evenly, into the core duct 142 and the fan duct 172 by a fan duct splitter or leading edge 144 of the core cowl 122. In the embodiment depicted, the inlet duct 180 is wider than the core duct 142 along the radial direction R. The inlet duct 180 is also wider than the fan duct 172 along the radial direction R.

Notably, for the embodiment depicted, the engine 100 includes one or more features to increase an efficiency of a third stream thrust, Fn_{3S} (e.g., a thrust generated by an airflow through the fan duct 172 exiting through the fan exhaust nozzle 178, generated at least in part by the ducted fan 184). In particular, the engine 100 further includes an array of inlet guide vanes 186 positioned in the inlet duct 180 upstream of the ducted fan 184 and downstream of the engine inlet 182. The array of inlet guide vanes 186 are arranged around the longitudinal axis 112. For this embodiment, the inlet guide vanes 186 are not rotatable about the longitudinal axis 112. Each inlet guide vane 186 defines a central blade axis (not labeled for clarity), and is rotatable about its respective central blade axis, e.g., in unison with one another. In such a manner, the inlet guide vanes 186 may be considered a variable geometry component. One or more actuators 188 are provided to facilitate such rotation and therefore may be used to change a pitch of the inlet guide vanes 186 about their respective central blade axes. However, in other embodiments, each inlet guide vane 186 may be fixed or unable to be pitched about its central blade axis.

Further, located downstream of the ducted fan 184 and upstream of the fan duct inlet 176, the engine 100 includes an array of outlet guide vanes 190. As with the array of inlet guide vanes 186, the array of outlet guide vanes 190 are not rotatable about the longitudinal axis 112. However, for the embodiment depicted, unlike the array of inlet guide vanes 186, the array of outlet guide vanes 190 are configured as fixed-pitch outlet guide vanes.

Further, it will be appreciated that for the embodiment depicted, the fan exhaust nozzle 178 of the fan duct 172 is further configured as a variable geometry exhaust nozzle. In such a manner, the engine 100 includes one or more actuators 192 for modulating the variable geometry exhaust nozzle. For example, the variable geometry exhaust nozzle may be configured to vary a total cross-sectional area (e.g., an area of the nozzle in a plane perpendicular to the longitudinal axis 112) to modulate an amount of thrust generated based on one or more engine operating conditions (e.g., temperature, pressure, mass flowrate, etc. of an airflow through the fan duct 172). A fixed geometry exhaust nozzle may also be adopted.

The combination of the array of inlet guide vanes 186 located upstream of the ducted fan 184, the array of outlet guide vanes 190 located downstream of the ducted fan 184, and the fan exhaust nozzle 178 may result in a more efficient generation of third stream thrust, Fn_{3S}, during one or more engine operating conditions. Further, by introducing a variability in the geometry of the inlet guide vanes 186 and the fan exhaust nozzle 178, the engine 100 may be capable of generating more efficient third stream thrust, Fn_{3S}, across a relatively wide array of engine operating conditions, including takeoff and climb (where a maximum total engine thrust Fn_{Total}, is generally needed) as well as cruise (where a lesser amount of total engine thrust, Fn_{Total}, is generally needed).

Moreover, referring still to FIG. 1, in exemplary embodiments, air passing through the fan duct 172 may be relatively cooler (e.g., lower temperature) than one or more fluids utilized in the turbomachine 120. In this way, one or more heat exchangers 200 may be positioned in thermal communication with the fan duct 172. For example, one or more heat exchangers 200 may be disposed within the fan duct 172 and utilized to cool one or more fluids from the core engine with the air passing through the fan duct 172, as a resource for removing heat from a fluid, e.g., compressor bleed air, oil or fuel.

Although not depicted, the heat exchanger 200 may be an annular heat exchanger extending substantially 360 degrees in the fan duct 172 (e.g., at least 300 degrees, such as at least 330 degrees). In such a manner, the heat exchanger 200 may effectively utilize the air passing through the fan duct 172 to cool one or more systems of the engine 100 (e.g., lubrication oil systems, compressor bleed air, electrical components, etc.). The heat exchanger 200 uses the air passing through the fan duct 172 as a heat sink and correspondingly increases the temperature of the air downstream of the heat exchanger 200 and exiting the fan exhaust nozzle 178.

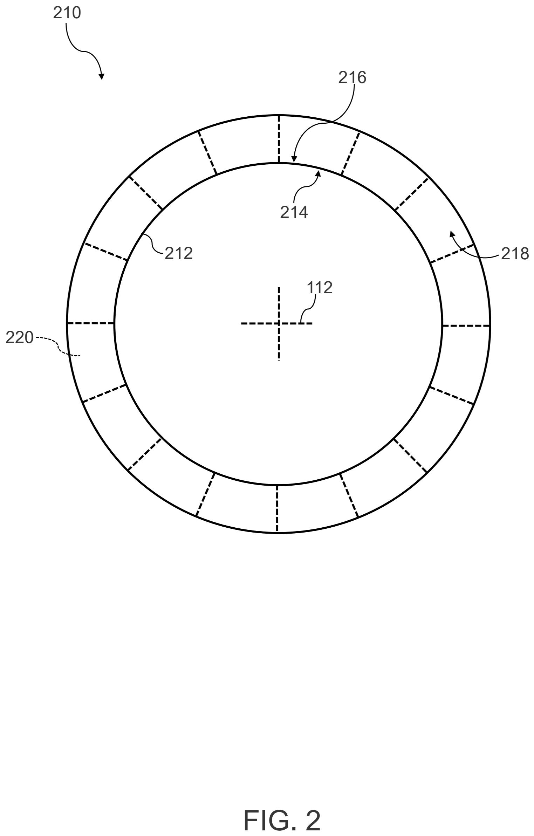

FIG. 2 is a schematic forward looking aft cross-section view of an exemplary shroud assembly 210 according to the present subject matter. The shroud assembly 210 may be a portion of a turbine section of a gas turbine engine, such as the HP turbine 132 or LP turbine 134 of the gas turbine engine 100 of FIG. 1. In exemplary embodiments, components of the gas turbine engine 100, particularly components within or defining the core duct 142 (FIG. 1) or working gas flowpath, may comprise a ceramic material and/or a composite material, such as a CMC material having high temperature capability. Components comprising a ceramic and/or composite material may be used within the working gas flowpath, such as within the combustion and/or turbine sections of the gas turbine engine 100. As an example, one or more stages of turbine rotor blades and/or turbine nozzles may be ceramic and/or CMC components formed from ceramic and/or CMC materials. As another example, one or more components lining the core duct 142, such as shrouds positioned radially outward from the turbine blades, may be ceramic and/or CMC components formed from ceramic and/or CMC materials. However, composite components made from ceramic and/or CMC or other composite materials may be used in other sections as well (e.g., the compressor and/or fan sections).

The shroud assembly 210 includes an annular shroud 212 extending circumferentially about the longitudinal axis 112 of the gas turbine engine 100 such that the shroud 212 surrounds the turbine rotor blades of the HP turbine 132. The shroud 212 includes a flow path or hot side 214 that faces the turbine rotor blades and the hot gas flow path defined by the core duct 142, and a cold side 216 opposite the hot side 214. The cold side 216 faces a cavity 218 that defines a flow path for a cooling fluid. Although described herein with respect to the HP turbine 132, the shroud assembly 210 also could be used with the LP turbine 134 (FIG. 1) or in any other suitable portion of the gas turbine engine 100. The shroud 212 may be circumferentially segmented into a plurality of shroud segments 220 such that the shroud segments 220 together form the annular shroud 212.

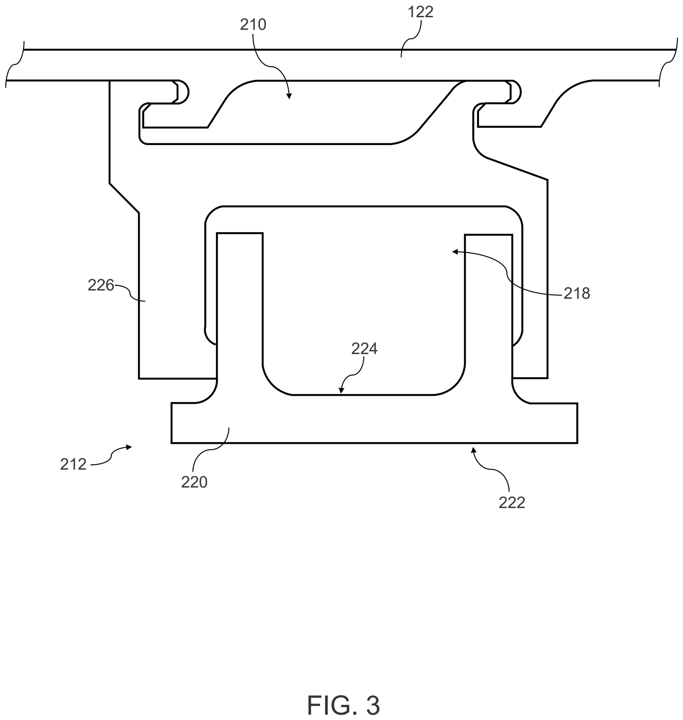

FIG. 3 is a schematic cross-section view of a portion of a turbine section of a gas turbine engine, such as the gas turbine engine 100 (FIG. 1), having the exemplary shroud assembly 210. In exemplary embodiments, each shroud segment 220 includes a hot side portion 222 and a cold side portion 224. The hot side portion 222 is a portion of the hot side 214 of the shroud 212, and the cold side portion 224 is a portion of the cold side 216 of the shroud 212. One or more hangers 226 mounts one or more of the shroud segments 220 in the gas turbine engine 100. The shroud hanger 226 is configured to couple the shroud assembly 210 with a casing of the gas turbine engine 100. The one or more hangers 226 may directly mount the shroud 212 to the core cowl 122 or outer casing of the turbomachine 120 (FIG. 1) or may indirectly couple the shroud 212 with the core cowl 122 via a hanger support (not shown). A plurality of seals (not shown) may extend between adjacent shroud segments 220 to seal against the ingestion of hot gas into the cooling fluid flow path and to prevent unwanted leakage of cooling flow into the working gas flowpath defined by the core duct 142 (FIG. 1). The plurality of shroud segments 220, which form the shroud 212, alone or together with the one or more hangers 226, define the annular cavity 218. As previously described, the cavity 218 forms the cooling fluid flow path faced by the cold side 216 (FIG. 2), such that the cold side portion 224 of each shroud segment 220 faces the cavity 218.

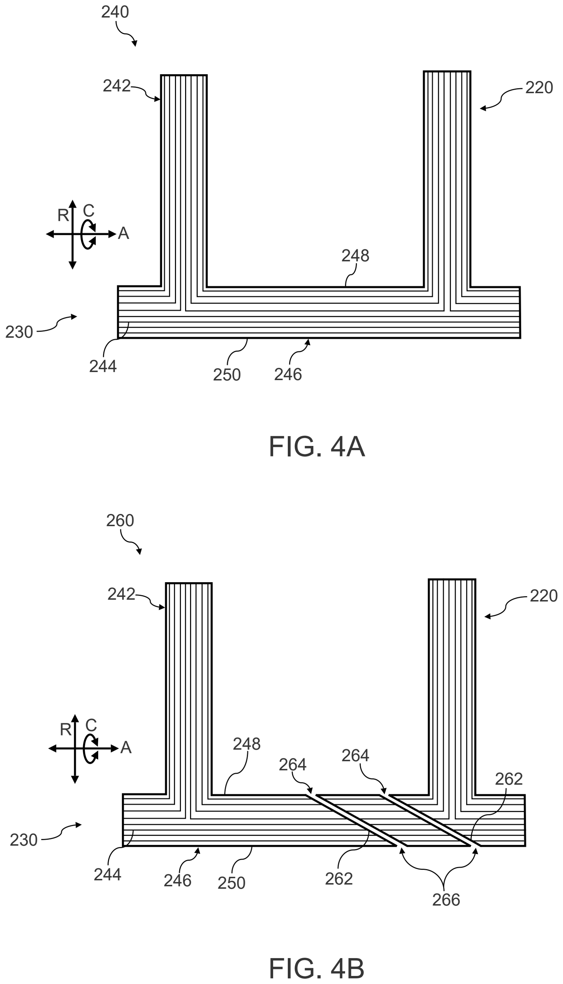

FIGS. 4A-4D are schematic, side views of various stages of forming an exemplary CMC component 230 in accordance with an embodiment of the present disclosure. In the embodiment illustrated in FIGS. 4A-4D, the CMC component 230 is the shroud segment 220 (see also FIGS. 2 and 3). However, the CMC component 230 may be a panel, tubular structure, or any other type of component usable in any suitable portion of the gas turbine engine 100 (FIG. 1).

FIG. 4A depicts an initial stage 240 of forming the CMC component 230. At the stage 240, a ceramic structure 242 is formed and/or provided. In the embodiment illustrated in FIG. 4A, the ceramic structure 242 may include a layup or stacked arrangement of one or more CMC plies 244. In exemplary embodiments the one or more CMC plies 244 are densified. Examples of densification processes include melt-infiltration, polymer impregnation and pyrolysis (PIP), chemical vapor infiltration (CVI) or combinations of such processes. Additionally or alternatively, the ceramic structure 242 may be a monolithic ceramic preform created using an additive manufacturing process. Exemplary embodiments of the formation of a monolithic ceramic preform may involve the use of additive manufacturing machines or methods. The ceramic structure 242 may be formed entirely of the one or more CMC plies 244, as depicted in FIG. 4A, or may be a combination of a monolithic ceramic preform and the one or more CMC plies 244 (e.g., the one or more CMC plies 244 bonded to a monolithic ceramic preform). In such embodiments according to the present disclosure, the monolithic ceramic preform may function as a mandrel such that a quantity of the one or more CMC plies 244 are laid up on one or more surfaces of the monolithic ceramic preform and processed as described herein (e.g., undergoing thermal and/or chemical processing to bond the one or more CMC plies 244 to the monolithic ceramic preform and densify the one or more CMC plies 244). In exemplary embodiments, the monolithic ceramic preform resulting from the additive manufacturing process may be burned out and melt-infiltrated prior to the application of the one or more CMC plies 244 to the monolithic ceramic preform.

In the embodiment illustrated in FIG. 4A, the ceramic structure 242 includes at least one wall 246 defining a first side 248 and a second side 250 opposite the first side 248. The first side 248 may correspond to the cold side portion 224 (FIG. 3), and the second side 250 may correspond to the hot side portion 222 (FIG. 3). Thus, the cold side portion 224 (FIG. 3) is separated from the hot side portion 222 (FIG. 3) by at least a portion of the wall 246. In other words, the wall 246 is disposed between the cold side portion 224 (FIG. 3) and the hot side portion 222 (FIG. 3).

FIG. 4B depicts a stage 260 of forming the CMC component 230 subsequent to the stage 240. At the stage 260, one or more bores 262 are formed in the ceramic structure 242. The one or more bores 262 may be any size and/or shape such as, by way of non-limiting example, circular holes, elliptical holes, circumferentially-extending slots and/or slits, axially-extending slots and/or slits, or any combination of the foregoing. Additionally, the one or more bores 262 may have a uniform or non-uniform shape or cross-section area transverse to its longitudinal direction such as, by way of non-limiting example, cylindrical, conical, frustoconical, or any combination of the foregoing. In exemplary embodiments, the one or more bores 262 extend through the wall 246 from the first side 248 to the second side 250 to define one or more inlet ends 264 of the respective bores 262 located proximate to the first side 248 and one or more outlet ends 266 of the respective bores 262 located proximate to the second side 250. The one or more inlet ends 264 are formed and/or positioned to be in fluid communication with the cold side 216 (FIG. 2). Thus, in other words, the one or more inlet ends 264 are open or exposed on the cold side portion 224 (FIG. 3). In exemplary embodiments, the one or more bores 262 may be machined or formed by drilling through the wall 246. However, it should be understood that, additionally or alternatively, the one or more bores 262 may be formed during the formation of the ceramic structure 242 (e.g., formed in the monolithic ceramic preform during an additive manufacturing process and/or formed by aligned openings in the one or more CMC plies 244). In the embodiment illustrated in FIG. 4B, the one or more bores 262 are formed at an acute angle with respect to at least one of the first side 248 or the second side 250 to facilitate a desired cooling flowpath direction from the cold side portion 224 (FIG. 3) toward the hot side portion 222 (FIG. 3). In the embodiment illustrated in FIG. 4B, two axially spaced apart bores 262 are depicted; however, it should be understood that a greater or lesser quantity of bores 262 may be used.

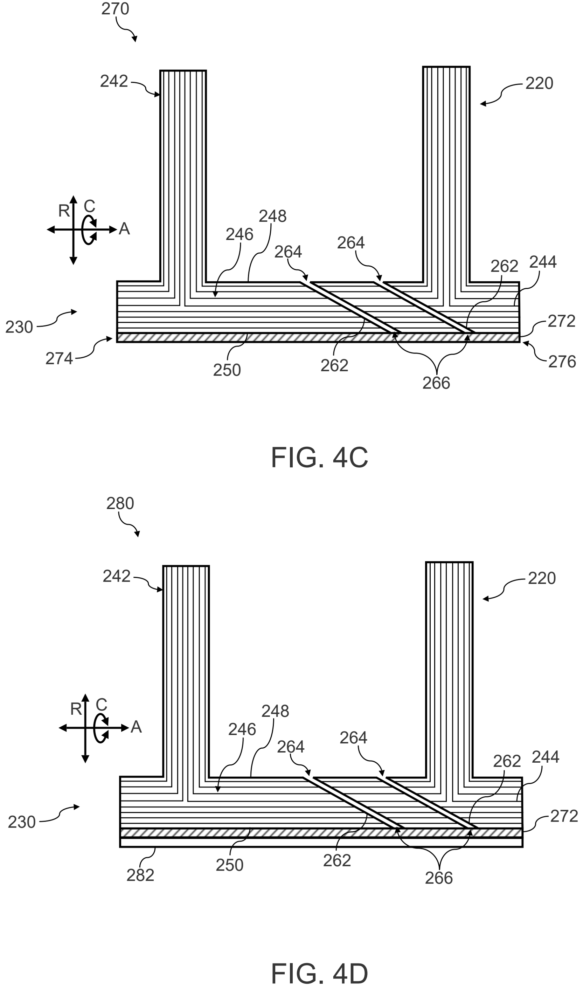

FIG. 4C depicts a stage 270 of forming the CMC component 230 subsequent to the stage 260. At the stage 270, one or more CMC plies 272 are applied and bonded to at least a portion of the second side 250 of the wall 246. In exemplary embodiments, the one or more CMC plies 272 are positioned on the second side 250 to cover one or more of the outlet ends 266 of the one or more bores 262 on the second side 250. In other words, one or more of the outlet ends 266 on the second side 250 are closed or sealed via the one or more CMC plies 272. In exemplary embodiments, the one or more CMC plies 272 are thermally and/or chemically processed to bond the one or more CMC plies 272 to the ceramic structure 242 and densify the one or more CMC plies 272 (e.g., by pyrolysis and melt-infiltration, or chemical vapor infiltration (CVI)). In the embodiment illustrated in FIG. 4C, the one or more CMC plies 272 extend in the axial direction A from a forward end 274 of the second side 250 to an aft end 276 of the second side 250. However, it should be understood that the axial length of the one or more CMC plies 272 may be otherwise defined. Further, it should be understood that the span of the one or more CMC plies 272 in the circumferential direction C may be such that the entire second side 250 is covered by the one or more CMC plies 272 or the one or more CMC plies 272 may extend in partial span in the circumferential direction C to partially cover the second side 250 in the circumferential direction C.

FIG. 4D depicts a stage 280 of forming the CMC component 230 subsequent to the stage 270. At the stage 280, a coating 282 is applied on at least a portion of a surface of the CMC component 230 corresponding to the hot side portion 222 (FIG. 3) of the CMC component 230. In exemplary embodiments, the coating 282 is applied to the one or more CMC plies 272. In other words, in exemplary embodiments, one or more of the outlet ends 266 of the one or more bores 262 are covered by the one or more CMC plies 272 and the coating 282. In exemplary embodiments, the coating 282 is an EBC coating. Thus, in exemplary embodiments, the EBC coating is located on the hot side portion 222 (FIG. 3).

Thus, in exemplary embodiments, in a shroud application, for example, in the event that the EBC coating is compromised, the one or more CMC plies 272, being on the hot side 214 (FIG. 2), will be opened or exposed to the working gas flowpath. In response to being exposed to the working gas flowpath, the working gas flowpath may wear away one or more portions of the CMC plies 272 to open or expose one or more of the outlet ends 266 of one or more of the bores 262 to initiate additional cooling of the CMC component 230 from the cold side 216 (FIG. 2).

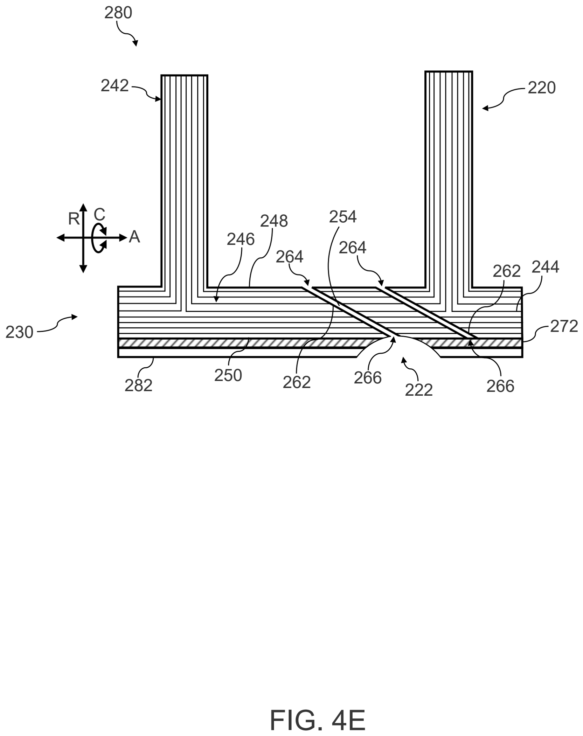

Referring to FIG. 4E, a schematic view of the CMC component 230 is depicted in a state where a portion of the coating 282 and a portion of the CMC plies 272 have been compromised, by way of non-limiting example, by the working gas flowpath. As depicted in FIG. 4E, the outlet end 266 of at least one bore 262 has become exposed or opened on the hot side portion 222 to form a cooling fluid flowpath 254 extending through the CMC component 230 from the cold side 216 (FIG. 2) to the hot side 214 (FIG. 2). Thus, in exemplary embodiments, cooling of various portions of the CMC component 230 are initiated "on demand" such that a flow path for a cooling fluid from the cavity 218 (FIGS. 2 and 3) is provided in response to one or more of the outlet ends 266 becoming opened to the working gas flowpath. In exemplary embodiments, the "on demand" cooling provided by the opened bores 262 results in greater engine performance at least because a cooling fluid flow is delivered only after one or more of the bores 262 become opened on the hot side 214 (FIG. 2). Further, embodiments of the present disclosure increase the durability of the coating 282. For example, at least because the one or more outlet ends 266 are covered by the one or more CMC plies 272, at least initially, the bores 262 are not interfacing with or penetrating the coating 282 which may otherwise adversely impact the durability of the coating 282.

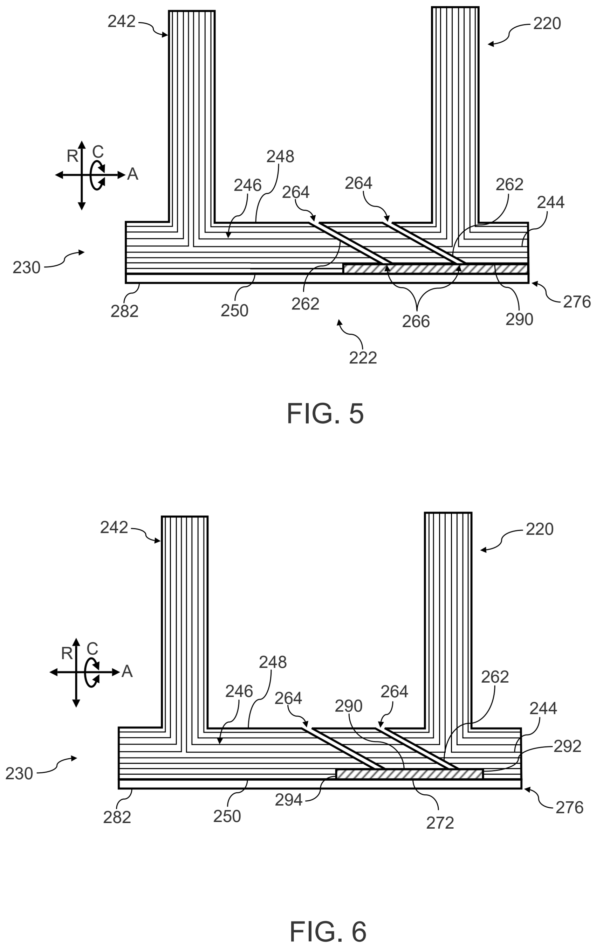

FIG. 5 is a schematic, side view of another exemplary embodiment of the CMC component 230 formed in accordance with the present disclosure. The CMC component 230 may be formed similar to as depicted and described in connection with FIGS. 4A-4D. However, in the embodiment illustrated in FIG. 5, a recess or pocket 290 is formed in the ceramic structure 242 on the second side 250 in one or more locations corresponding to the one or more outlet ends 266. The pocket 290 may be any size, shape, and/or depth, and may be dimensionally uniform or non-uniform. The pocket 290 may be a discrete pocket (e.g., axially discrete and/or circumferentially discrete) or may extend an entire directional span of the ceramic structure 242 such as, by way of non-limiting example, a slit extending an entire circumferential span of the ceramic structure 242 or a slit extending an entire axial span of the ceramic structure 242. The ceramic structure 242 may be formed with the pocket 290 (e.g., formed during an additive manufacturing process and/or omitting one or more of the CMC plies 244 in the location or region of the pocket 290) and/or the pocket 290 may be formed by machining the second side 250 in one or more locations corresponding to the one or more outlet ends 266. The pocket 290 is a recess or inwardly-disposed cavity in the ceramic structure 242 on the second side 250. In the embodiment illustrated in FIG. 5, the pocket 290 extends axially forward from the aft end 276 of the ceramic structure 242 a defined distance to cover one or more of the outlet ends 266 of the one or more respective bores 262. In exemplary embodiments, one or more of the bores 262 extend from the first side 248 through the wall 246 to the pocket 290. In other words, the bore 262 has the inlet end 264 located on the first side 248 and extends toward the second side 250 terminating at the pocket 290 such that the outlet end 266 interfaces with the pocket 290. As depicted in FIG. 5, the one or more CMC plies 272 are thereafter laid up or disposed in the pocket 290 and cover the one or more outlet ends 266 of the bores 262 terminating at the pocket 290. As described above in connection with FIG. 4C, the CMC plies 272 are chemically and/or thermally processed to bond the CMC plies 272 to the ceramic structure 242 and densify the CMC plies 272. As described above in connection with FIG. 4D, the coating 282 is applied on at least a portion of a surface of the hot side portion 222 of the CMC component 230. In the embodiment illustrated in FIG. 5, the coating 282 is applied on at least a portion of the second side 250 to the ceramic structure 242 and the CMC plies 272. In the embodiment illustrated in FIG. 5, the one or more CMC plies 272 extend partially over the second side 250 and extend in the axial direction to terminate at the aft end 276 of the ceramic structure 242. As depicted in FIG. 5, the one or more CMC plies 272 are positioned to cover a plurality of outlet ends 266.

FIG. 6 is a schematic, side view of another exemplary embodiment of the CMC component 230 formed in accordance with the present disclosure. The CMC component 230 may be formed similar to as depicted and described in connection with FIGS. 4A-4D and 5. However, in the embodiment illustrated in FIG. 6, the pocket 290 formed in the ceramic structure 242 on the second side 250 has a first end 292 and a second end 294 axially spaced apart and forward from the first end 292. The first end 292 is spaced axially apart and forward from the aft end 276 of the ceramic structure 242. Thus, in the embodiment illustrated in FIG. 6, the CMC plies 272 terminate at a location spaced apart from the aft end 276 of the ceramic structure 242. Thus, as depicted in FIGS. 4C, 5, and 6, the CMC plies 272 may extend over an entirety of the second side 250 or be spaced apart from one or more boundaries or ends of the ceramic structure 242. Although FIGS. 4C, 5, and 6 depict the application of the CMC plies 272 in an axial direction, the CMC plies 272 and/or pocket 290 may be similarly configured in the circumferential direction.

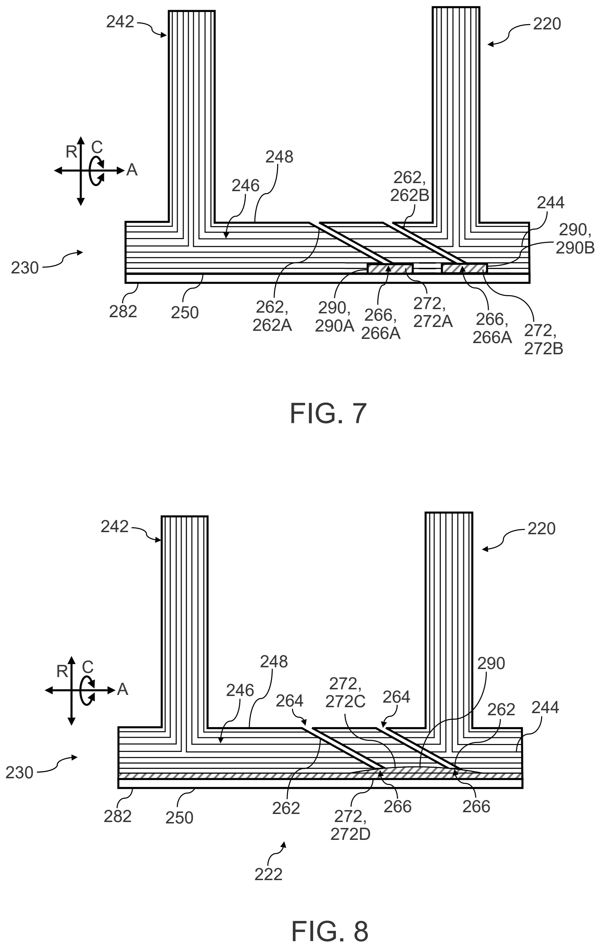

FIG. 7 is a schematic, side view of another exemplary embodiment of the CMC component 230 formed in accordance with the present disclosure. The CMC component 230 may be formed similar to as depicted and described in connection with FIGS. 4A-4D, 5, and 6. However, in the embodiment illustrated in FIG. 7, one or more of the pockets 290 are formed locally corresponding to the locations of one or more respective outlet ends 266 of the bores 262. In the exemplary embodiment depicted in FIG. 7, a pocket 290A is formed on the second side 250 corresponding to a location of an outlet end 266A of the bore 262A, and a pocket 290B is formed on the second side 250 corresponding to a location of an outlet end 266B of the bore 262B. Thus, in the embodiment illustrated in FIG. 7, the pocket 290A is spaced apart or discrete from the pocket 290B. The pockets 290A and 290B may be sized larger than a size of the respective outlet ends 266A, 266B such that a first set of one or more CMC plies 272A disposed within the pocket 290A and a second set of one or more CMC plies 272B disposed within the pocket 290B cover the respective outlet ends 266A, 266B. Thus, in exemplary embodiments, a localized pocket 290 may be formed on the second side 250 corresponding to each bore 262. Thus, in exemplary embodiments, one pocket 290 may be positioned to correspond to a single outlet end 266 of one bore 262, or one pocket 290 may be positioned to correspond to a plurality of outlet ends 266 of a plurality of respective bores 262. As described above in connection with FIGS. 4C, 5, and 6, the pockets 290 and the one or more CMC plies 272 laid up in the pockets 290 may extend to one or more the edges or boundaries of the ceramic structure 242 or may terminate at various positions spaced apart from each other and spaced apart from the edges or boundaries of the ceramic structure 242.

FIG. 8 is a schematic, side view of another exemplary embodiment of the CMC component 230 formed in accordance with the present disclosure. The CMC component 230 may be formed similar to as depicted and described in connection with FIGS. 4A-4D and 5-7. However, in the embodiment illustrated in FIG. 8, different dimensional profiles may be used for the one or more pockets 290. In the embodiment depicted in FIG. 8, the pocket 290 is formed on the second side 250 having a varying depth dimension into the ceramic structure 242 as the pocket 290 extends in the axial direction. It should be understood that the pocket 290 may be a circumferentially discrete pocket also have a varying depth dimension as the pocket 290 extends in a circumferential direction or may extend an entire circumferential span of the ceramic structure 242. In the embodiment depicted in FIG. 8, the one or more CMC plies 272 disposed on the second side 250 to cover the one or more outlet ends 266 may include one or more CMC plies 272 having different dimensional characteristics. In the exemplary embodiment depicted in FIG. 8, the one or more CMC plies 272 may include one or more CMC plies 272C disposed within the pocket 290 where at least one CMC ply 272C of the one or more CMC plies 272C is in direct contact with the ceramic structure 242. Additionally, one or more CMC plies 272D may be applied on the one or more CMC plies 272C. In exemplary embodiments, one or more of the CMC plies 272D extend beyond at least one boundary or edge of one or more of the CMC plies 272C. In the embodiment illustrated in FIG. 8, the one or more CMC plies 272D extend over the entirety of the second side 250 in the axial direction. It should be understood that the one or more CMC plies 272D may extend over the entirety of the second side 250 in the circumferential direction or partially span the second side 250 in the circumferential direction.

Embodiments of the present disclosure are also applicable to repairing the CMC component 230. In exemplary embodiments, referring also to FIG. 8, the pocket 290 may be formed on the second side 250 to remove any damaged portions of the CMC component 230 on the hot side portion 222. The one of more CMC plies 272 may be disposed within the pocket 290 and/or extending beyond the boundaries of the pocket 290 and also covering one or more of the outlet ends 266 exposed after removing any damaged material. As described above in connection with at least FIG. 4C, the CMC plies 272 may be bonded to the CMC component 230 on the second side 250 and chemically and/or thermally processed to densify the CMC plies 272. After densification of the CMC plies 272, the coating 282 may be applied on at least a portion of the surface of the hot side portion 222 of the CMC component 230.

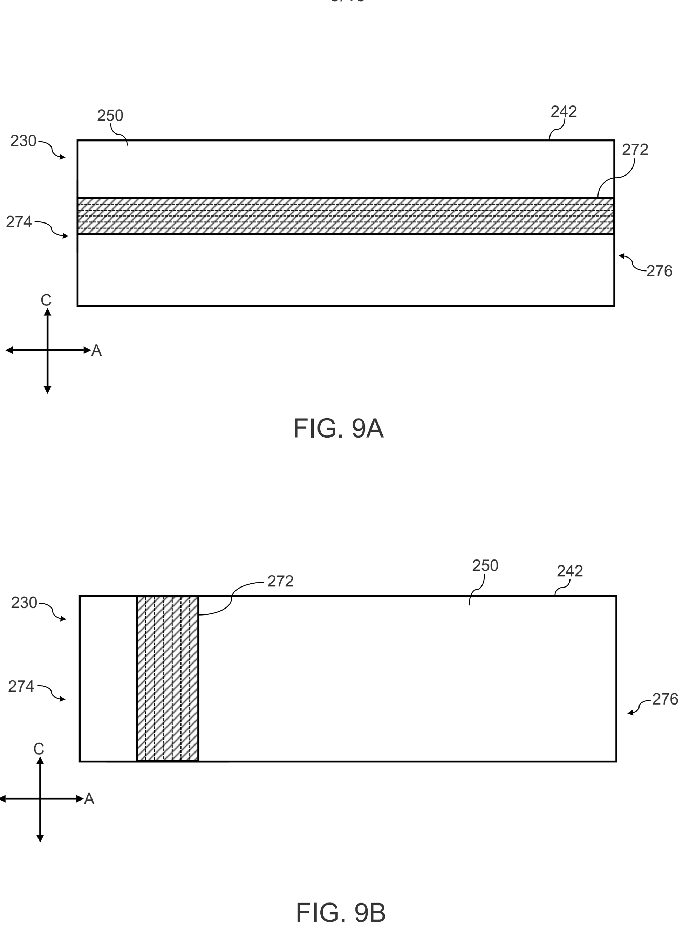

FIGS. 9A and 9B are schematic plan views of the second side 250 of the CMC component 230 according to the present disclosure. In FIGS. 9A and 9B, the CMC component 230 is depicted prior to application of the coating 282 (FIGS. 4D and 5-8). In other words, FIGS. 9A and 9B depict different orientations and/or dimensions of the one or more CMC plies 272. In FIG. 9A, the one or more CMC plies 272 extend axially an entire length of the CMC component 230 (e.g., from the forward end 274 to the aft end 276) and partially span the second side 250 in the circumferential direction C. In FIG. 9B, the one or more CMC plies 272 extend circumferentially an entire span of the CMC component 230 and partially span the second side 250 in the axial direction A. As depicted in FIGS. 9A and 9B, the fibers of the one or more CMC plies 272 may also be oriented in any desired direction (e.g., axially as depicted in FIG. 9A, circumferentially as depicted in FIG. 9B, or at other angular orientations).

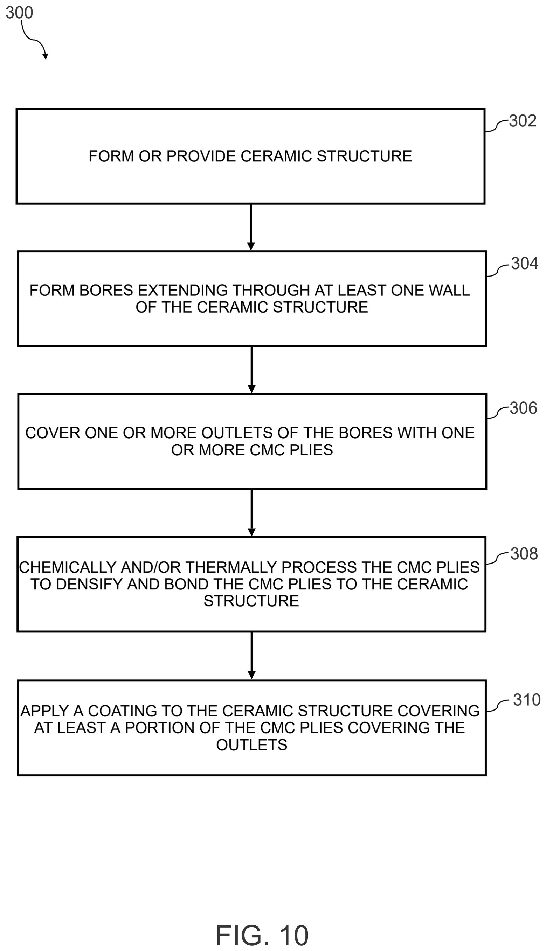

FIG. 10 provides a flow diagram of an exemplary method (300) of forming a CMC component in accordance with exemplary embodiments of the present disclosure. For instance, the exemplary method (300) may be utilized for forming the CMC component 230. It should be appreciated that the method (300) is discussed herein only to describe exemplary aspects of the present subject matter and is not intended to be limiting.

At (302), the method (300) includes forming or providing a ceramic structure, such as the ceramic structure 242 of FIG. 4A. As described in connection with FIG. 4A, the ceramic structure 242 may be formed from one or more CMC plies 244, additively manufactured, or a combination of the foregoing. At (302), the method may include chemically and/or thermally processing the ceramic structure 242 (e.g., melt-infiltrating the ceramic structure 242). At (304), the method (300) includes forming one or more bores extending through at least a portion of the ceramic structure, such as the one or more bores 262 depicted in FIG. 4B. Although the one or more bores may be formed by drilling or machining, it should be understood that the one or more bores may be formed in the ceramic structure concurrently during the formation of the ceramic structure (e.g., formed during an additive manufacturing process or formed during the layup of the one or more CMC plies 244). At (306), the method (300) includes laying up or applying one or more CMC plies on a side of the ceramic structure to cover one or more openings or outlet ends of the one or more bores on such side of the ceramic structure, such as the one or more CMC plies 272 covering one or more outlet ends 266 of the bores 262 depicted in FIGS. 4C and 5-8. At (308), the method (300) includes chemically and/or thermally processing the CMC plies applied at (306) to densify and bond the CMC plies to the ceramic structure (e.g., melt-infiltrating via a CVI or other densification process). At (310), the method (300) includes applying a coating on at least a portion of a surface of a hot side of the CMC component, such as the coating 282 in the form of an EBC coating as depicted in FIGS. 4D and 5-8. In exemplary embodiments, the coating covers at least a portion of the CMC plies applied at (306) in locations corresponding to the covered bores formed at (304). Thus, in exemplary embodiments, as depicted in FIGS. 4D and 5-8, one or more of the outlet ends 266 of the respective one or more bores 262 are covered first on the second side 250 by the one or more CMC plies 272 and, second, by the coating 282.

Thus, embodiments of the present disclosure provide a ceramic composite component, and a method for forming a ceramic composite component, useable at least in applications where at least a portion of the ceramic composite component is exposed to a hot gas flowpath. The ceramic composite component includes one or more bores extending partially through a wall of the ceramic composite component. At least one bore includes an inlet end and an outlet end. The inlet end is positioned to be in fluid communication with a cooling fluid flowpath. However, the outlet end, positioned near the working gas flowpath side of the ceramic composite component, is covered by one or more CMC plies so that the outlet end is not initially exposed to the working gas flowpath. An EBC coating covers the CMC plies and any desired remaining portions of the ceramic composite component exposed to the working gas flowpath. In the event the EBC coating becomes compromised, the working gas flowpath will cause at least a portion of the CMC plies covering the outlet end to wear away, thereby exposing the outlet end to the working gas flow path and forming a cooling fluid flowpath through the wall from the cold side to the hot side of the ceramic composite component. Thus, embodiments of the present disclosure provide localized cooling of the ceramic composite component in an "on demand" basis in areas where the EBC coating has become compromised. Accordingly, instead of providing continuous cooling of the ceramic composite component when such cooling may not be needed, embodiments of the present disclosure minimize any potential performance penalty that may otherwise be associated with providing such unnecessary cooling. Additionally, at least because the outlet ends of the bores do not initially interface with the EBC coating, the durability of the EBC coating is enhanced.

Although specific features of various embodiments may be shown in some drawings and not in others, this is for convenience only. In accordance with the principles of the present disclosure, any feature of a drawing may be referenced and/or claimed in combination with any feature of any other drawing.

Further aspects of the disclosure are provided by the subject matter of the following clauses:
A method of forming a ceramic matrix composite (CMC) component, comprising: providing a ceramic structure defining at least one wall, wherein the at least one wall includes one or more bores extending through the wall, at least one bore of the one or more bores having an inlet end proximate a first side of the wall and an outlet end proximate a second side of the wall; disposing one or more CMC plies on at least a portion of the second side to cover the outlet end of the at least one bore; densifying and bonding together the one or more CMC plies and the ceramic structure; and applying an environmental barrier coating on at least a portion of the second side including at least a portion of the one or more CMC plies covering the outlet end of the at least one bore.

The method of any previous clause, wherein densifying and bonding the one or more CMC plies comprises performing a chemical vapor infiltration (CVI) process.

The method of the previous clause, wherein the one or more CMC plies comprise one or more first CMC plies, and wherein providing the ceramic structure comprises: laying up one or more second CMC plies to form the ceramic structure; and densifying the one or more second CMC plies.

The method of any previous clause, wherein densifying the one or more second CMC plies comprises performing a melt-infiltration process.

The method of any previous clause, further comprising machining the at least one bore through the densified one or more second CMC plies.

The method of any previous clause, further comprising laying up the one or more second CMC plies to define the at least one bore.

The method of any previous clause, further comprising forming a pocket on the second side proximate a location of the outlet end; and disposing the one or more CMC plies in the pocket covering the outlet end.

The method of any previous clause, further comprising forming the pocket to extend to at least one end of the ceramic structure.

The method of any previous clause, further comprising forming the pocket having a first end and a second end, wherein at least one of the first end or the second end is positioned spaced apart from an end of the ceramic structure.

The method of any previous clause, wherein the one or more bores comprise a first bore having a first outlet end and a second bore having a second outlet end, wherein the first outlet end is spaced apart from the second outlet end, and further comprising: forming a first pocket on the second side proximate a location of the first outlet end; and forming a second pocket on the second side proximate a location of the second outlet end, wherein the first pocket is spaced apart from the second pocket; and wherein disposing the one or more CMC plies on at least the portion of the second side comprises: disposing one or more first CMC plies in the first pocket covering the first outlet end; and disposing the one or more second CMC plies in the second pocket covering the second outlet end.

The method of any previous clause, wherein the at least one bore comprises a first bore having a first outlet end and a second bore having a second outlet end, and further comprising disposing the one or more CMC plies on at least the portion of the second side to cover the first outlet end and the second outlet end.

The method of any previous clause, further comprising forming the first outlet end spaced apart from the second outlet end.

The method of any previous clause, further comprising disposing the one or more CMC plies to extend to an end of the ceramic structure.

The method of any previous clause, wherein disposing the one or more CMC plies on at least the portion of the second side comprises: disposing one or more first CMC plies on at least the portion of the second side to cover the outlet end; and disposing one or more second CMC plies on the one or more first CMC plies, wherein the one or more second CMC plies extend beyond at least one boundary of the one or more first CMC plies.

The method of any previous clause, further comprising laying up the one or more CMC plies to extend to at least one end of the ceramic structure.

The method of any previous clause, further comprising forming the pocket to extend to a plurality of outlet ends.

The method of any previous clause, further comprising laying up the one or more CMC plies to cover a single outlet end.

The method of any previous clause, further comprising forming the pocket to extend to at least one end of the ceramic structure.

A method of forming a ceramic matrix composite (CMC) component, comprising: laying up one or more first CMC plies to form at least one wall; densifying the one or more first CMC plies; forming one or more bores extending through the at least one wall, at least one bore of the one or more bores comprising an inlet end proximate a first side of the wall and an outlet end proximate a second side of the wall; disposing one or more second CMC plies on at least a portion of the second side to cover the outlet end of the at least one bore; densifying and bonding the one or more second CMC plies to the at least one wall; and applying an environmental barrier coating on at least a portion of the one or more second CMC plies covering the outlet end of the at least one bore.

The method of any previous clause, further comprising: forming a pocket in the one or more first CMC plies on the second side proximate a location of the outlet end; and disposing the one or more second CMC plies in the pocket covering the outlet end.

The method of any previous clause, wherein densifying and bonding the one or more second CMC plies comprises performing a chemical vapor infiltration (CVI) process.

The method of any previous clause, wherein forming the one or more bores comprises: forming a first bore having a first outlet end proximate the second side; and forming a second bore having a second outlet end proximate the second side, the first bore spaced apart from the second bore; and the method further comprising: disposing a first set of the one or more second CMC plies onto at least the portion of the second side to cover the first outlet end; and disposing a second set of the one or more second CMC plies onto at least the portion of the second side to cover the second outlet end.

A method of forming a ceramic matrix composite (CMC) component, comprising: providing a ceramic structure having at least one wall defining a first side and a second side opposite the first side; forming a pocket on the second side; forming one or more bores extending through the at least one wall, at least one bore of the one or more bores comprising an inlet end proximate the first side and an outlet end proximate the second side, wherein the outlet end interfaces with the pocket; disposing one or more CMC plies in the pocket to cover the outlet end of the at least one bore; densifying and bonding the one or more CMC plies to the at least one wall; and applying an environmental barrier coating on at least a portion of the second side including at least a portion of the one or more CMC plies covering the outlet end of the at least one bore.

The method of any previous clause, wherein forming the pocket comprises machining the second side of the ceramic structure.

The method of any previous clause, wherein providing the ceramic structure comprises additively manufacturing the ceramic structure.

The method of any previous clause, wherein the pocket extends to an end of the ceramic structure.

The method of any previous clause, wherein forming the one or more bores comprises: forming a first bore having a first outlet end interfacing with the pocket; and forming a second bore spaced apart from the first bore, wherein the second bore has a second outlet end interfacing with the pocket.

The method of any previous clause, further comprising disposing the one or more CMC plies in the pocket to cover the first and second outlet ends.

A ceramic matrix composite (CMC) component, comprising: a ceramic structure defining at least one wall disposed between a hot side portion of the CMC component and a cold side portion of the CMC component, wherein the at least one wall includes at least one bore having an inlet end and an outlet end, the inlet end being open on the cold side portion; one or more densified CMC plies bonded to at least a portion of the hot side portion covering the outlet end; and an environmental barrier coating disposed on at least a portion of the hot side portion including at least a portion of the one or more densified CMC plies covering the outlet end of the at least one bore.

A ceramic matrix composite (CMC) component, comprising: a ceramic structure defining at least one wall, wherein the at least one wall includes one or more bores extending through the wall, at least one bore of the one or more bores having an inlet end proximate a first side of the wall and an outlet end proximate a second side of the wall; one or more densified CMC plies bonded to at least a portion of the second side to cover the outlet end of the at least one bore; and an environmental barrier coating disposed on at least a portion of the second side including at least a portion of the one or more densified CMC plies covering the outlet end of the at least one bore.

The CMC component of any previous clause, wherein the ceramic structure includes a pocket located on the hot side portion, and wherein the at least one bore extends from the cold side portion to the hot side portion and terminates at the pocket.

The CMC component of any previous clause, wherein the one or more CMC plies are disposed within the pocket and cover the outlet end.

The CMC component of any previous clause, wherein the pocket extends to an end of the ceramic structure.

The CMC component of any previous clause, wherein the at least one bore comprises: a first bore having a first outlet end disposed within the pocket; and a second bore spaced apart from the first bore, wherein the second bore has a second outlet end disposed within the pocket.

The CMC component of any previous clause, wherein the one or more CMC plies are disposed within the pocket to cover the first and second outlet ends.

A shroud assembly for a gas turbine engine, the shroud assembly comprising: a shroud segment having a hot side portion and a cold side portion, the hot side portion facing a working gas flowpath of the gas turbine engine, the cold side portion facing a cooling fluid flowpath; and a hanger for mounting the shroud segment in the gas turbine engine; and wherein the shroud segment comprises a ceramic structure defining at least one wall, wherein the at least one wall includes one or more bores extending through the wall, at least one bore of the one or more bores having an inlet end proximate a first side of the wall in fluid communication with the cooling fluid flowpath and an outlet end proximate a second side of the wall; one or more densified CMC plies bonded to at least a portion of the second side to cover the outlet end of the at least one bore; and an environmental barrier coating disposed on at least a portion of the second side including at least a portion of the one or more CMC plies covering the outlet end of the at least one bore.

The method of any preceding clause, wherein the at least one bore comprises a first bore having a first outlet end and a second bore having a second outlet end, and further comprising disposing the one or more CMC plies onto at least the portion of the second side to cover the first outlet end and the second outlet end.

The method of any preceding clause, wherein forming the one or more bores comprises: forming a first bore having a first outlet end proximate the second side; and forming a second bore having a second outlet end proximate the second side, the first bore spaced apart from the second bore; and the method further comprising: disposing a first set of the one or more second CMC plies on at least the portion of the second side to cover the first outlet end; and disposing a second set of the one or more second CMC plies on at least the portion of the second side to cover the second outlet end.

This written description uses examples to disclose the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

While this disclosure has been described as having exemplary designs, the present disclosure can be further modified within the scope of this disclosure. This application is therefore intended to cover any variations, uses, or adaptations of the disclosure using its general principles. Further, this application is intended to cover such departures from the present disclosure as come within known or customary practice in the art to which this disclosure pertains and which fall within the limits of the appended claims.

## Claims

1. A method of forming a ceramic matrix composite (CMC) component (230), comprising:
providing a ceramic structure (242) defining at least one wall (246), wherein the at least one wall (246) includes one or more bores (262) extending through the wall (246), at least one bore (262) of the one or more bores (262) having an inlet end (264) proximate a first side (248) of the wall (246) and an outlet end (266) proximate a second side (250) of the wall (246);
disposing one or more CMC plies (272) on at least a portion of the second side (250) to cover the outlet end (266) of the at least one bore (262);
densifying and bonding together the one or more CMC plies (272) and the ceramic structure (242); and
applying an environmental barrier coating (282) on at least a portion of the one or more CMC plies (272) covering the outlet end (266) of the at least one bore (262).

2. The method of claim 1, wherein the one or more CMC plies (272) comprise one or more first CMC plies (272), and wherein providing the ceramic structure (242) comprises:
laying up one or more second CMC plies (244) to form the ceramic structure; and
densifying the one or more second CMC plies (244).

3. The method of claim 2, further comprising machining the at least one bore (262) through the densified one or more second CMC plies (244).

4. The method of any of claims 2 to 3, further comprising laying up the one or more second CMC plies (244) to define the at least one bore (262).

5. The method of any preceding claim, wherein densifying and bonding the one or more CMC plies (272) comprises performing a chemical vapor infiltration (CVI) process.

6. The method of any preceding claim, further comprising:
forming a pocket (290) on the second side (250) proximate a location of the outlet end (266); and
disposing the one or more CMC plies (272) in the pocket (290) covering the outlet end (266).

7. The method of any preceding claim, wherein the at least one bore (262) comprises a first bore (262) having a first outlet end (266) and a second bore (262) having a second outlet end (266), and further comprising disposing the one or more CMC plies (272) on at least the portion of the second side (250) to cover the first outlet end (266) and the second outlet end (266).

8. The method of claim 7, further comprising forming the first outlet end (266) spaced apart from the second outlet end (266).

9. The method of any preceding claim, further comprising disposing the one or more CMC plies (272) to extend to an end of the ceramic structure (242).

10. The method of any preceding claim, wherein disposing the one or more CMC plies (272) on at least the portion of the second side (250) comprises:
disposing one or more first CMC plies (272) on at least the portion of the second side (250) to cover the outlet end (266); and
disposing one or more second CMC plies (272) on the one or more first CMC plies (272), wherein the one or more second CMC plies (272) extend beyond at least one boundary of the one or more first CMC plies (272).

11. A ceramic matrix composite (CMC) component (230), comprising:
a ceramic structure (242) defining at least one wall (246) disposed between a hot side portion (222) of the CMC component (230) and a cold side portion (224) of the CMC component (230), wherein the at least one wall (246) includes at least one bore (262) having an inlet end (264) and an outlet end (266), the inlet end (264) being open on the cold side portion (224);
one or more CMC plies (272) disposed on at least a portion of the hot side portion (222) covering the outlet end (266); and
an environmental barrier coating (282) disposed on at least a portion of the hot side portion (224) including at least a portion of the one or more CMC plies (272) covering the outlet end (266) of the at least one bore (262).

12. The CMC component (230) of claim 11, wherein the ceramic structure (242) includes a pocket (290) located on the hot side portion (222), and wherein the at least one bore (262) extends from the cold side portion (224) to the hot side portion (222) and interfaces with the pocket (290).

13. The CMC component (230) of claim 12, wherein the one or more CMC plies (272) are disposed within the pocket (290) and cover the outlet end (266).

14. The CMC component (230) of any of claims 12 to 13, wherein the pocket (290) extends to an end of the ceramic structure (242).

15. The CMC component (230) of any of claims 12 to 14, wherein the at least one bore (262) comprises:
a first bore (262) having a first outlet end (266) disposed within the pocket (290); and
a second bore (262) spaced apart from the first bore (262), wherein the second bore (262) has a second outlet end (266) disposed within the pocket (290).
